# EUROPEAN PATENT SPECIFICATION

(11) **EP 2 285 930 B1**
(45) Date of publication and mention of the grant of the patent: **27.01.2016**
(21) Application number: 09767799.1
(22) Date of filing: 19.06.2009
(51) Int. Cl.: C09K 3/30, C09K 5/04, A62D 1/00, C08J 9/14

(54) **AZEOTROPIC AND AZEOTROPE-LIKE COMPOSITIONS OF Z-1,1,1,4,4,4-HEXAFLUORO-2-BUTENE**
AZEOTROPE ODER AZEOTROPENÄHNLICHE ZUSAMMENSETZUNGEN AUS Z-1,1,1,4,4,4-HEXAFLUOR-2-BUTEN
COMPOSITIONS AZÉOTROPIQUES ET DE TYPE AZÉOTROPE DE Z-1,1,1,4,4,4-HEXAFLUORO-2-BUTÈNE

(30) Priority: 20.06.2008 US 74178; 20.06.2008 US 74179; 20.06.2008 US 74181
(43) Date of publication of application: 23.02.2011
(73) Proprietor: E. I. du Pont de Nemours and Company, Wilmington, DE 19898 (US)
(72) Inventor: ROBIN, Mark, L., Middletown, Delaware 19709 (US)
(74) Representative: Heinemann, Monica
(86) International application number: PCT/US2009/047912
(87) International publication number: WO 2009/155490

(56) References cited:
- WO-A-2007/100885
- WO-A-2008/134061
- JP-A- 5 179 043
- US-A- 5 531 916
- US-A- 5 578 137
- US-A1- 2006 245 944
- US-A1- 2007 010 592
- US-A1- 2007 096 051
- US-A1- 2007 102 021

## Description

This application claims priority of U.S. Patent Applications 61/074178, 61/074179 and 61/074181 filed June 20, 2008.

### BACKGROUND OF THE INVENTION

### Field of-the Disclosure

The present disclosure relates to azeotropic or azeotrope-like compositions of Z-1,1,1,4,4,4-hexafluoro-2-butene.

### Description of Related Art

Many industries have been working for the past few decades to find replacements for the ozone depleting chlorofluorocarbons (CFCs) and hydrochlorofluorocarbons (HCFCs). The CFCs and HCFCs have been employed in a wide range of applications, including their use as aerosol propellants, refrigerants, cleaning agents, expansion agents for thermoplastic and thermoset foams, heat transfer media, gaseous dielectrics, fire extinguishing and suppression agents, power cycle working fluids, polymerization media, particulate removal fluids, carrier fluids, buffing abrasive agents, and displacement drying agents. In the search for replacements for these versatile compounds, many industries have turned to the use of hydrofluorocarbons (HFCs).

The HFCs do not contribute to the destruction of stratospheric ozone, but are of concern due to their contribution to the "greenhouse effect", i.e., they contribute to global warming. As a result of their contribution to global warming, the HFCs have come under scrutiny, and their widespread use may also be limited in the future. Thus, there is a need for compositions that do not contribute to the destruction of stratospheric ozone and also have low global warming potentials (GWPs). Certain hydrofluoroolefins, such as 1,1,1,4,4,4-hexafluoro-2-butene (CF₃CH=CHCF₃, FC-1336mzz), are believed to meet both goals.

JP 5179043 discloses mixtures of Z-1,1,1,4,4,4-hexafluoro-2-butene with pentane or isopentane.

US 2007/010592 describes various uses of fluoroalkanes and mentions a mixture of diethyl ether and fluoroalkanes in general.

### SUMMARY OF THE INVENTION

This application includes three different types of azeotropic or azeotrope-like mixtures.

This disclosure provides a composition consisting essentially of (a) Z-FC-1336mzz and (b) diethyl ether (CH₃CH₂OCH₂CH₃); wherein the diethyl ether is present in an effective amount to form an azeotropic or azeotrope-like mixture with Z-FC-1336mzz.

This disclosure also provides a composition consisting essentially of (a) Z-FC-1336mzz and (b) 2-chloropropane (CH₃CHClCH₃); wherein the 2-chloropropane is present in an effective amount to form an azeotropic or azeotrope-like mixture with Z-FC-1336mzz.

This disclosure also provides a composition consisting essentially of (a) Z-FC-1336mzz and (b) perfluoro(2-methyl-3-pentanone) (CF₃CF₂C(O)CF(CF₃)₂); wherein the perfluoro(2-methyl-3-pentanone) is present in an effective amount to form an azeotropic or azeotrope-like mixture with Z-FC-1336mzz.

### BRIEF SUMMARY OF THE DRAWINGS

FIG. 1 - FIG. 1 is a graphical representation of an azeotrope and azeotrope-like compositions consisting essentially of Z-FC-1336mzz and diethyl ether at a pressure of about 12.0 psia.
FIG. 2 - FIG. 2 is a graphical representation of an azeotrope and azeotrope-like compositions consisting essentially of Z-FC-1336mzz and 2-chloropropane at a pressure of about 12.0 psia.
FIG. 3 - FIG. 3 is a graphical representation of an azeotrope and azeotrope-like compositions consisting essentially of Z-FC-1336mzz and perfluoro(2-methyl-3-pentanone) at a temperature of about 50.0 °C.

### DETAILED DESCRIPTION OF THE INVENTION

In many applications, the use of a pure single component or an azeotropic or azeotrope-like mixture is desirable. For example, when a blowing agent composition (also known as foam expansion agents or foam expansion compositions) is not a pure single component or an azeotropic or azeotrope-like mixture, the composition may change during its application in the foam forming process. Such change in composition could detrimentally affect processing or cause poor performance in the application. Also, in refrigeration applications, a refrigerant is often lost during operation through leaks in shaft seals, hose connections, soldered joints and broken lines. In addition, the refrigerant may be released to the atmosphere during maintenance procedures on refrigeration equipment. If the refrigerant is not a pure single component or an azeotropic or azeotrope-like composition, the refrigerant composition may change when leaked or discharged to the atmosphere from the refrigeration equipment. The change in refrigerant composition may cause the refrigerant to become flammable or to have poor refrigeration performance. Accordingly, there is a need for using azeotropic or azeotrope-like mixtures in these and other applications, for example azeotropic or azeotrope-like mixtures containing Z-1,1,1,4,4,4-hexafluoro-2-butene (Z-CF₃CH=CHCF₃, Z-FC-1336mzz).

Before addressing details of embodiments described below, some terms are defined or clarified.

FC-1336mzz may exist as one of two configurational isomers, E or Z. FC-1336mzz as used herein refers to the isomers, Z-FC-1336mzz or E-FC-1336mzz, as well as any combinations or mixtures of such isomers.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Also, use of "a" or "an" are employed to describe elements and components described herein. This is done merely for convenience and to give a general sense of the scope of the invention. This description should be read to include one or at least one and the singular also includes the plural unless it is obvious that it is meant otherwise.

Unless otherwise defined, all technical and scientific terms used herein have the same meaning as commonly understood by one of ordinary skill in the art to which this invention belongs. Although methods and materials similar or equivalent to those described herein can be used in the practice or testing of embodiments of the present invention, suitable methods and materials are described below. All publications, patent applications, patents, and other references mentioned herein are incorporated by reference in their entirety, unless a particular passage is cited. In case of conflict, the present specification, including definitions, will control. In addition, the materials, methods, and examples are illustrative only and not intended to be limiting.

Z-FC-1336mzz is a known compound, and its preparation method has been disclosed, for example, in U.S. Patent Publication No. 2008/0269532, hereby incorporated by reference in its entirety.

This application includes azeotropic or azeotrope-like compositions comprising Z-FC-1336mzz.

In some embodiments of this invention, the composition consists essentially of (a) Z-FC-1336mzz and (b) diethyl ether; wherein the diethyl ether is present in an effective amount to form an azeotropic or azeotrope-like mixture with Z-FC-1336mzz.

In some embodiments of this invention, the composition consists essentially of (a) Z-FC-1336mzz and (b) 2-chloropropane; wherein the 2-chloropropane is present in an effective amount to form an azeotropic or azeotrope-like mixture with Z-FC-1336mzz.

In some embodiments of this invention, the composition consists essentially of (a) Z-FC-1336mzz and (b) perfluoro(2-methyl-3-pentanone); wherein the perfluoro(2-methyl-3-pentanone) is present in an effective amount to form an azeotropic or azeotrope-like mixture with Z-FC-1336mzz.

By effective amount is meant an amount, which, when combined with Z-FC-1336mzz, results in the formation of an azeotropic or azeotrope-like mixture. This definition includes the amounts of each component, which amounts may vary depending on the pressure applied to the composition so long as the azeotropic or azeotrope-like compositions continue to exist at the different pressures, but with possible different boiling points. Therefore, effective amount includes the amounts, such as may be expressed in weight or mole percentages, of each component of the compositions of the instant invention which form azeotropic or azeotrope-like compositions at temperatures or pressures other than as described herein.

As recognized in the art, an azeotropic composition is an admixture of two or more different components which, when in liquid form under a given pressure, will boil at a substantially constant temperature, which temperature may be higher or lower than the boiling temperatures of the individual components, and which will provide a vapor composition essentially identical to the overall liquid composition undergoing boiling. (see, e.g., M. F. Doherty and M.F. Malone, Conceptual Design of Distillation Systems, McGraw-Hill (New York), 2001, 185-186, 351-359).

Accordingly, the essential features of an azeotropic composition are that at a given pressure, the boiling point of the liquid composition is fixed and that the composition of the vapor above the boiling composition is essentially that of the overall boiling liquid composition (i.e., no fractionation of the components of the liquid composition takes place). It is also recognized in the art that both the boiling point and the weight percentages of each component of the azeotropic composition may change when the azeotropic composition is subjected to boiling at different pressures. Thus, an azeotropic composition may be defined in terms of the unique relationship that exists among the components or in terms of the compositional ranges of the components or in terms of exact weight percentages of each component of the composition characterized by a fixed boiling point at a specified pressure.

For the purpose of this invention, an azeotrope-like composition means a composition that behaves like an azeotropic composition (i.e., has constant boiling characteristics or a tendency not to fractionate upon boiling or evaporation). Hence, during boiling or evaporation, the vapor and liquid compositions, if they change at all, change only to a minimal or negligible extent. This is to be contrasted with non-azeotrope-like compositions in which during boiling or evaporation, the vapor and liquid compositions change to a substantial degree.

Additionally, azeotrope-like compositions exhibit dew point pressure and bubble point pressure with virtually no pressure differential. That is to say that the difference in the dew point pressure and bubble point pressure at a given temperature will be a small value. In this invention, compositions with a difference in dew point pressure and bubble point pressure of less than or equal to 5 percent (based upon the bubble point pressure) is considered to be azeotrope-like.

It is recognized in this field that when the relative volatility of a system approaches 1.0, the system is defined as forming an azeotropic or azeotrope-like composition. Relative volatility is the ratio of the volatility of component 1 to the volatility of component 2. The ratio of the mole fraction of a component in vapor to that in liquid is the volatility of the component.

To determine the relative volatility of any two compounds, a method known as the PTx method can be used. The vapor-liquid equilibrium (VLE), and hence relative volatility, can be determined either isothermally or isobarically. The isothermal method requires measurement of the total pressure of mixtures of known composition at constant temperature. In this procedure, the total absolute pressure in a cell of known volume is measured at a constant temperature for various compositions of the two compounds. The isobaric method requires measurement of the temperature of mixtures of known composition at constant pressure. In this procedure, the temperature in a cell of known volume is measured at a constant pressure for various compositions of the two compounds. Use of the PTx Method is described in detail in "Phase Equilibrium in Process Design", Wiley-Interscience Publisher, 1970, written by Harold R. Null, on pages 124 to 126; hereby incorporated by reference.

These measurements can be converted into equilibrium vapor and liquid compositions in the PTx cell by using an activity coefficient equation model, such as the Non-Random, Two-Liquid (NRTL) equation, to represent liquid phase nonidealities. Use of an activity coefficient equation, such as the NRTL equation is described in detail in "The Properties of Gases and Liquids," 4th edition, published by McGraw Hill, written by Reid, Prausnitz and Poling, on pages 241 to 387, and in "Phase Equilibria in Chemical Engineering," published by Butterworth Publishers, 1985, written by Stanley M. Walas, pages 165 to 244. Both aforementioned references are hereby incorporated by reference. Without wishing to be bound by any theory or explanation, it is believed that the NRTL equation, together with the PTx cell data, can sufficiently predict the relative volatilities of the Z-1,1,1,4,4,4-hexafluoro-2-butene-containing compositions of the present invention and can therefore predict the behavior of these mixtures in multi-stage separation equipment such as distillation columns.

It was found through experiments that Z-FC-1336mzz and diethyl ether form azeotropic or azeotrope-like compositions.

To determine the relative volatility of this binary pair, the PTx method described above was used. The temperature in a PTx cell of known volume was measured at constant pressure for various binary compositions. These measurements were then reduced to equilibrium vapor and liquid compositions in the cell using the NRTL equation.

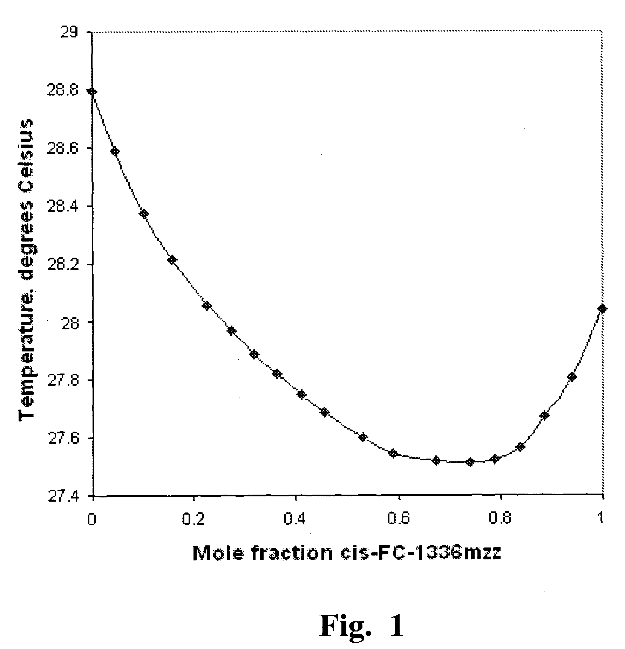

The temperatures measured versus the compositions in the PTx cell for Z-FC-1336mzz/diethyl ether mixture are shown in FIG. 1, which graphically illustrates the formation of an azeotropic or azeotrope-like compositions consisting essentially of Z-FC-1336mzz and diethyl ether as indicated by a mixture of about 66.8 mole % Z-1,1,1,4,4,4-hexafluoro-2-butene and 33.2 mole % diethyl ether having the lowest temperature (about 27.5 °C) over the range of compositions at a pressure of 12.0 psia (83 kPa). Based upon these findings, it has been calculated that Z-FC-1336mzz and diethyl ether form azeotropic compositions ranging from about 46.8 mole percent to about 97.1 mole percent Z-FC-1336mzz and from about 2.9 mole percent to about 53.2 mole percent diethyl ether (which form azeotropic compositions boiling at a temperature of from about -50 °C to about 160 °C and at a pressure of from about 0.2 psia (1.4 kPa) to about 342 psia (2358 kPa)). For example, at 33.0 °C and atmospheric pressure (14.7 psia, 101 kPa) the azeotropic composition is 68.8 mole % Z-1,1,1,4,4,4-hexafluoro-2-butene and 31.2 mole % diethyl ether.

Some embodiments of azeotropic compositions are listed in Table 1.

**Table 1. Azeotropic Compositions: Z-FC-1336mzz and Diethyl Ether**

| Temperature | Pressure | Z-FC-1336mzz | Diethyl Ether |
|---|---|---|---|
| °C | psia | Mole fraction | Mole fraction |
| | | | |
| -50 | 0.18 | 0.4676 | 0.5324 |
| -40 | 0.37 | 0.4707 | 0.5293 |
| -30 | 0.72 | 0.4854 | 0.5146 |
| -20 | 1.31 | 0.5085 | 0.4915 |
| -10 | 2.27 | 0.5374 | 0.4626 |
| 0 | 3.73 | 0.5701 | 0.4299 |
| 10 | 5.89 | 0.6050 | 0.3950 |
| 20 | 8.95 | 0.6411 | 0.3589 |
| 30 | 13.17 | 0.6775 | 0.3225 |
| 40 | 18.84 | 0.7137 | 0.2863 |
| 50 | 26.25 | 0.7491 | 0.2509 |
| 60 | 35.75 | 0.7833 | 0.2167 |
| 70 | 47.71 | 0.8161 | 0.1839 |
| 80 | 62.52 | 0.8473 | 0.1527 |
| 90 | 80.59 | 0.8765 | 0.1235 |
| 100 | 102.39 | 0.9035 | 0.0965 |
| 110 | 128.39 | 0.9279 | 0.0721 |
| 120 | 159.11 | 0.9492 | 0.0508 |
| 130 | 195.14 | 0.9665 | 0.0335 |
| 140 | 237.10 | 0.9781 | 0.0219 |
| 150 | 285.69 | 0.9814 | 0.0186 |
| 160 | 341.73 | 0.9707 | 0.0293 |

Additionally, azeotrope-like compositions containing Z-FC-1336mzz and diethyl ether may also be formed. Such azeotrope-like compositions exist around azeotropic compositions. Some embodiments of azeotrope-like compositions are listed in Table 2. Some more embodiments of azeotrope-like compositions are listed in Table 3.

**Table 2 Azeotrope-like compositions**

| COMPONENTS | T °C) | Mole Percentage Range |
|---|---|---|
| Z-FC-1336mzz/Diethyl ether | -40 | 1-99/1-99 |
| Z-FC-1336mzz/Diethyl ether | 0 | 1-99/1-99 |
| Z-FC-1336mzz/Diethyl ether | 20 | 1-99/1-99 |
| Z-FC-1336mzz/Diethyl ether | 40 | 1-99/1-99 |
| Z-FC-1336mzz/Diethyl ether | 80 | 1-99/1-99 |
| Z-FC-1336mzz/Diethyl ether | 120 | 1-99/1-99 |

**Table 3 Azeotrope-like compositions**

| COMPONENTS | T(°C) | Mole Percentage Range |
|---|---|---|
| Z-FC-1336mzz/Diethyl ether | -40 | 10-90/10-90 |
| Z-FG-1336mzz/Diethyl ether | 0 | 10-90/10-90 |
| Z-FC-1336mzz/Diethyl ether | 20 | 10-90/10-90 |
| Z-FC-1336mzz/Diethyl ether | 40 | 10-90/10-90 |
| Z-FC-1336mzz/Diethyl ether | 80 | 10-90/10-90 |
| Z-FC-1336mzz/Diethyl ether | 120 | 10-90/10-90 |

It was found through experiments that Z-FC-1336mzz and 2-chloropropane form azeotropic or azeotrope-like compositions. To determine the relative volatility of this binary pair, the PTx method described above was used. The temperature in a PTx cell of known volume was measured at constant pressure for various binary compositions. These measurements were then reduced to equilibrium vapor and liquid compositions in the cell using the NRTL equation.

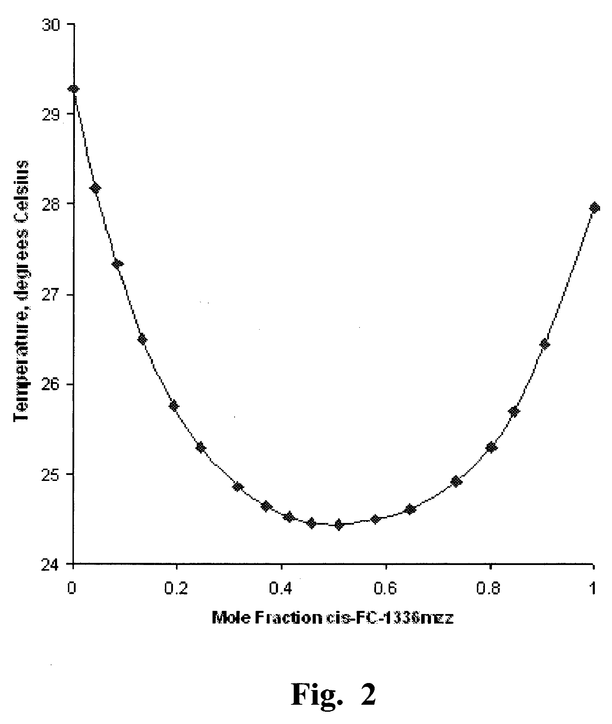

The temperature measured versus the compositions in the PTx cell for Z-FC-1336mzz/ 2-chloropropane mixture is shown in FIG. 2, which illustrates graphically the formation of an azeotropic composition of Z-1,1,1,4,4,4-hexafluoro-2-butene and 2-chloropropane at about 82,5 kPa (12.0 psia) as indicated by a mixture of about 50.7 mole % Z-1,1,1,4,4,4-hexafluoro-2-butene and 49.3 mole % 2-chloropropane having the lowest temperature (24.3 °C) over the range of compositions at this pressure.

Based upon these findings, it has been calculated that Z-FC-1336mzz and 2-chloropropane form azeotropic compositions ranging from about 33.3 mole percent to about 98.7 mole percent Z-FC-1336mzz and from about 1.3 mole percent to about 66.7 mole percent 2-chloropropane (which form azeotropic compositions boiling at a temperature of from about -50 °C to about 160 °C and at a pressure of from about 0.2 psia (1.4 kPa) to about 342 psia (2358 kPa)). For example, at 29.8 °C and atmospheric pressure (14.7 psia, 101 kPa) the azeotropic composition is 51.7 mole % Z-1,1,1,4,4,4-hexafluoro-2-butene and 48.3 mole % 2-chloropropane.

Some embodiments of azeotropic compositions are listed in Table 4.

**Table 4. Azeotropic Compositions: Z-FC-1336mzz and 2-Chloropropane**

| Temperature | Pressure | Z-FC-1336mzz | 2-Chloropropane |
|---|---|---|---|
| °C | psia | Mole Fraction | Mole fraction |
| | | | |
| -50 | 0.23 | 0.3335 | 0.6665 |
| -40 | 0.47 | 0.3632 | 0.6368 |
| -30 | 0.88 | 0.3907 | 0.6093 |
| -20 | 1.57 | 0.4159 | 0.5841 |
| -10 | 2.67 | 0.4391 | 0.5609 |
| 0 | 4.33 | 0.4606 | 0.5394 |
| 10 | 6.76 | 0.4805 | 0.5195 |
| 20 | 10.16 | 0.4992 | 0.5008 |
| 30 | 14.80 | 0.5170 | 0.4830 |
| 40 | 20.96 | 0.5342 | 0.4658 |
| 50 | 28.94 | 0.5512 | 0.4488 |
| 60 | 39.06 | 0.5684 | 0.4316 |
| 70 | 51.64 | 0.5862 | 0.4138 |
| 80 | 67.05 | 0.6051 | 0.3949 |
| 90 | 85.64 | 0.6258 | 0.3742 |
| 100 | 107.77 | 0.6491 | 0.3509 |
| 110 | 133.84 | 0.6762 | 0.3238 |
| 120 | 164.27 | 0.7087 | 0.2913 |
| 130 | 199.54 | 0.7491 | 0.2509 |
| 150 | 287.05 | 0.8747 | 0.1253 |
| 160 | 341.70 | 0.9870 | 0.0130 |

Additionally, azeotrope-like compositions containing Z-FC-1336mzz and 2-chloropropane may also be formed. Such azeotrope-like compositions exist around azeotropic compositions. Some embodiments of azeotrope-like compositions are listed in Table 5. Some more embodiments of azeotrope-like compositions are listed in Table 6.

**Table 5 Azeotrope-like compositions**

| COMPONENTS | T (°C) | Mole Percentage Range |
|---|---|---|
| | | 1-4/96-99 |
| Z-FC-1336mzz/2-chloropropane | -40 | 17-67/33-83 |
| | | 87-99/1-23 |
| | 0 | 1-7/93-99 |
| Z-FC-1336mzz/2-chloropropane | | 18-99/1-82 |
| Z-FC-1336mzz/2-chloropropane | 20 | 1-99/1-99 |
| Z-FC-1336mzz/2-chloropropane | 40 | 1-99/1-99 |
| Z-FC-1336mzz/2-chloropropane | 80 | 1-99/1-99 |
| Z-FC-1336mzz/2-chloropropane | 120 | 1-99/1-99 |
| Z-FC-1336mzz/2-chloropropane | 160 | 1-99/1-99 |

**Table 6 Azeotrope-like compositions**

| COMPONENTS | T (°C) | Mole Percentage Range |
|---|---|---|
| | | 17-67/33-83 |
| Z-FC-1336mzz/2-chloropropane | -40 | 87-95/5-23 |
| Z-FC-1336mzz/2-chloropropane | 0 | 18-95/5-82 |
| Z-FC-1336mzz/2-chloropropane | 20 | 10-90/10-90 |
| Z-FC-1336mzz/2-chloropropane | 40 | 10-90/10-90 |
| Z-FC-1336mzz/2-chloropropane | 80 | 10-90/10-90 |
| Z-FC-1336mzz/2-chloropropane | 120 | 10-90/10-90 |
| Z-FC-1336mzz/2-chloropropane | 160 | 10-90/10-90 |

It was found through experiments that Z-FC-1336mzz and perfluoro(2-methyl-3-pentanone) form azeotropic or azeotrope-like compositions. To determine the relative volatility of this binary pair, the PTx method described above was used. The total absolute pressure in a PTx cell of known volume was measured at constant temperature for various binary compositions. These measurements were then reduced to equilibrium vapor and liquid compositions in the cell using the NRTL equation.

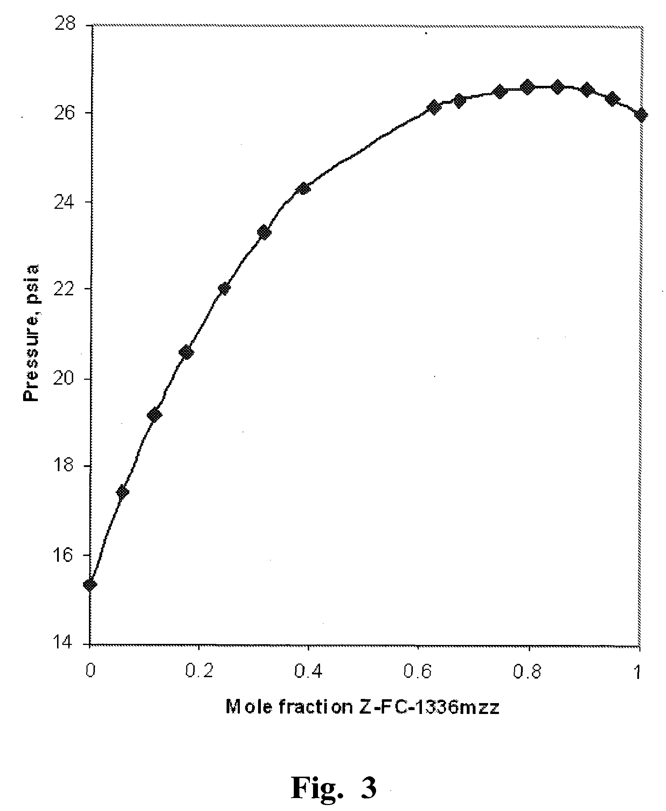

The vapor pressure measured versus the compositions in the PTx cell for Z-FC-1336mzz/perfluoro(2-methyl-3-pentanone) mixture is shown in FIG. 3, which illustrates graphically the formation of an azeotrope and azeotrope-like compositions of Z-1,1,1,4,4,4-hexafluoro-2-butene and perfluoro(2-methyl-3-pentanone) at about 50.0 °C, as indicated by a mixture of about 82.7 mole % Z-1,1,1,4,4,4-hexafluoro-2-butene and 17.3 mole % perfluoro(2-methyl-3-pentanone) having the highest pressure (184 kPa (26.7 psia)) over the range of compositions at this temperature.

Based upon these findings, it has been calculated that Z-FC-1336mzz and perfluoro(2-methyl-3-pentanone) form azeotropic compositions ranging from about 68.9 mole percent to about 87.4 mole percent Z-FC-1336mzz and from about 12.6 mole percent to about 31.1 mole percent perfluoro(2-methyl-3-pentanone) (which form azeotropic compositions boiling at a temperature of from about -50 °C to about 140 °C and at a pressure of from about 0.2 psia (1.4 kPa) to about 250 psia (1724 kPa)). For example, at 32.6 °C and atmospheric pressure (14.7 psia, 101 kPa) the azeotropic composition is 82.6 mole % Z-1,1,1,4,4,4-hexafluoro-2-butene and 17.4 mole % perfluoro(2-methyl-3-pentanone).

Some embodiments of azeotropic compositions are listed in Table 7.

**Table 7: Azeotropic Compositions: Z-FC-1336mzz and Perfluoro(2-methyl-3-pentanone)**

| Temperature | Pressure | Z-FC-1336mzz | perfluoro(2-methyl-3-pentanone) |
|---|---|---|---|
| °C | psia | Mole fraction | Mole fraction |
| -50 | 0.17 | 0.8736 | 0.1264 |
| -40 | 0.36 | 0.8595 | 0.1405 |
| -30 | 0.70 | 0.8483 | 0.1517 |
| -20 | 1.30 | 0.8398 | 0.1602 |
| -10 | 2.25 | 0.8335 | 0.1665 |
| 0 | 3.73 | 0.8293 | 0.1707 |
| 10 | 5.91 | 0.8268 | 0.1732 |
| 20 | 9.03 | 0.8257 | 0.1743 |
| 30 | 13.33 | 0.8257 | 0.1743 |
| 40 | 19.10 | 0.8264 | 0.1736 |
| 50 | 26.66 | 0.8275 | 0.1725 |
| 60 | 36.35 | 0.8286 | 0.1714 |
| 70 | 48.55 | 0.8290 | 0.1710 |
| 80 | 63.67 | 0.8282 | 0.1718 |
| 90 | 82.16 | 0.8255 | 0.1745 |
| 100 | 104.53 | 0.8197 | 0.1803 |
| 110 | 131.38 | 0.8094 | 0.1906 |
| 120 | 163.47 | 0.7919 | 0.2081 |
| 130 | 201.96 | 0.7615 | 0.2385 |
| 140 | 249.71 | 0.6890 | 0.3110 |

Additionally, azeotrope-like compositions containing Z-FC-1336mzz and perfluoro(2-methyl-3-pentanone) may also be formed. Such azeotrope-like compositions exist around azeotropic compositions. Some embodiments of azeotrope-like compositions are listed in Table 8. Some more embodiments of azeotrope-like compositions are listed in Table 9.

**Table 8 Azeotrope-like compositions**

| COMPONENTS | T (°C) | Mole Percentage Range |
|---|---|---|
| Z-FC-1336mzz/perfluoro(2-methyl-3-pentanone) | -40 | 71-99/1-29 |
| Z-FC-1336mzz/perfluoro(2-methyl-3-pentanone) | 0 | 64-99/1-36 |
| Z-FC-1336mzz/perfluoro(2-methyl-3-pentanone) | 20 | 61-99/1-39 |
| Z-FC-1336mzz/perfluoro(2-methyl-3-pentanone) | 40 | 59-99/1-41 |
| Z-FC-1336mzz/perfluoro(2-methyl-3-pentanone) | 80 | 52-99/1-48 |
| Z-FC-1336mzz/perfluoro(2-methyl-3-pentanone) | 120 | 42-99/1-58 |

**Table 9 Azeotrope-like compositions**

| COMPONENTS | T (°C) | Mole Percentage Range |
|---|---|---|
| Z-FC-1336mzz/perfluoro(2-methyl-3-pentanone) | -40 | 71-95/5-29 |
| Z-FC-1336mzz/perfluoro(2-methyl-3-pentanone) | 0 | 64-95/5-36 |
| Z-FC-1336mzz/perfluoro(2-methyl-3-pentanone) | 20 | 61-95/5-39 |
| Z-FC-1336mzz/perfluoro(2-methyl-3-pentanone) | 40 | 59-95/5-41 |
| Z-FC-1336mzz/perfluoro(2-methyl-3-pentanone) | 80 | 52-95/5-48 |
| Z-FC-1336mzz/perfluoro(2-methyl-3-pentanone) | 120 | 42-95/5-58 |

The azeotropic or azeotrope-like compositions of the present invention can be prepared by any convenient method including mixing or combining the desired amounts. In one embodiment of this invention, an azeotropic or azeotrope-like composition can be prepared by weighing the desired component amounts and thereafter combining them in an appropriate container.

The azeotropic or azeotrope-like compositions of the present invention can be used in a wide range of applications, including their use as aerosol propellants, refrigerants, solvents, cleaning agents, blowing agents (foam expansion agents) for thermoplastic and thermoset foams, heat transfer media, gaseous dielectrics, fire extinguishing and suppression agents, power cycle working fluids, polymerization media, particulate removal fluids, carrier fluids, buffing abrasive agents, and displacement drying agents.

One embodiment of this invention provides a process for preparing a thermoplastic or thermoset foam. The process comprises using an azeotropic or azeotrope-like composition as a blowing agent, wherein said azeotropic or azeotrope-like composition consists essentially of Z-1,1,1,4,4,4-hexafluoro-2-butene and a component selected from the group consisting of diethyl ether, 2-chloropropane, and perfluoro(2-methyl-3-pentanone).

Another embodiment of this invention provides a process for producing refrigeration. The process comprises condensing an azeotropic or azeotrope-like composition and thereafter evaporating said azeotropic or azeotrope-like composition in the vicinity of the body to be cooled, wherein said azeotropic or azeotrope-like composition consists essentially of Z-1,1,1,4,4,4-hexafluoro-2-butene and a component selected from the group consisting of diethyl ether, 2-chloropropane, and perfluoro(2-methyl-3-pentanone).

Another embodiment of this invention provides a process using an azeotropic or azeotrope-like composition as a solvent, wherein said azeotropic or azeotrope-like composition consists essentially of Z-1,1,1,4,4,4-hexafluoro-2-butene and a component selected from the group consisting of diethyl ether, 2-chloropropane, and perfluoro(2-methyl-3-pentanone).

Another embodiment of this invention provides a process for producing an aerosol product. The process comprises using an azeotropic or azeotrope-like composition as a propellant, wherein said azeotropic or azeotrope-like composition consists essentially of Z-1,1,1,4,4,4-hexafluoro-2-butene and a component selected from the group consisting of diethyl ether, 2-chloropropane, and perfluoro(2-methyl-3-pentanone).

Another embodiment of this invention provides a process using an azeotropic or azeotrope-like composition as a heat transfer media, wherein said azeotropic or azeotrope-like composition consists essentially of Z-1,1,1,4,4,4-hexafluoro-2-butene and a component selected from the group consisting of diethyl ether, 2-chloropropane, and perfluoro(2-methyl-3-pentanone).

Another embodiment of this invention provides a process for extinguishing or suppressing a fire. The process comprises using an azeotropic or azeotrope-like composition as a fire extinguishing or suppression agent, wherein said azeotropic or azeotrope-like composition consists essentially of Z-1,1,1,4,4,4-hexafluoro-2-butene and a component selected from the group consisting of diethyl ether, 2-chloropropane, and perfluoro(2-methyl-3-pentanone).

Another embodiment of this invention provides a process using an azeotropic or azeotrope-like composition as dielectrics, wherein said azeotropic or azeotrope-like composition consists essentially of Z-1,1,1,4,4,4-hexafluoro-2-butene and a component selected from the group consisting of diethyl ether, 2-chloropropane, and perfluoro(2-methyl-3-pentanone).

## Claims

1. A composition consisting essentially of:
(a) Z-1,1,1,4,4,4-hexafluoro-2-butene; and
(b) a component selected from the group consisting of diethyl ether, 2-chloropropane, and perfluoro(2-methyl-3-pentanone); wherein said component is present in an effective amount to form an azeotropic combination with the Z-1,1,1,4,4,4-hexafluoro-2-butene.

2. A composition consisting essentially of:
(a) Z-1,1,1,4,4,4-hexafluoro-2-butene; and
(b) a component selected from the group consisting of diethyl ether, 2-chloropropane, and perfluoro(2-methyl-3-pentanone); wherein said component is present in an effective amount to form an azeotrope-like combination with the Z-1,1,1,4,4,4-hexafluoro-2-butene.

3. A process for preparing a thermoplastic or thermoset foam comprising using an azeotropic or azeotrope-like composition as a blowing agent, wherein said azeotropic or azeotrope-like composition consists essentially of Z-1,1,1,4,4,4-hexafluoro-2-butene and a component selected from the group consisting of diethyl ether, 2-chloropropane, and perfluoro(2-methyl-3-pentanone).

4. A process for producing refrigeration comprising condensing an azeotropic or azeotrope-like composition and thereafter evaporating said azeotropic or azeotrope-like composition in the vicinity of the body to be cooled, wherein said azeotropic or azeotrope-like composition consists essentially of Z-1,1,1,4,4,4-hexafluoro-2-butene and a component selected from the group consisting of diethyl ether, 2-chloropropane, and perfluoro(2-methyl-3-pentanone).

5. A process comprising using an azeotropic or azeotrope-like composition as a solvent, wherein said azeotropic or azeotrope-like composition consists essentially of Z-1,1,1,4,4,4-hexafluoro-2-butene and a component selected from the group consisting of diethyl ether, 2-chloropropane, and perfluoro(2-methyl-3-pentanone).

6. A process for producing an aerosol product comprising using an azeotropic or azeotrope-like composition as a propellant, wherein said azeotropic or azeotrope-like composition consists essentially of Z-1,1,1,4,4,4-hexafluoro-2-butene and a component selected from the group consisting of diethyl ether, 2-chloropropane, and perfluoro(2-methyl-3-pentanone).

7. A process comprising using an azeotropic or azeotrope-like composition as a heat transfer media, wherein said azeotropic or azeotrope-like composition consists essentially of Z-1,1,1,4,4,4-hexafluoro-2-butene and a component selected from the group consisting of diethyl ether, 2-chloropropane, and perfluoro(2-methyl-3-pentanone).

8. A process for extinguishing or suppressing a fire comprising using an azeotropic or azeotrope-like composition as a fire extinguishing or suppression agent, wherein said azeotropic or azeotrope-like composition consists essentially of Z-1,1,1,4,4,4-hexafluoro-2-butene and a component selected from the group consisting of diethyl ether, 2-chloropropane, and perfluoro(2-methyl-3-pentanone).

9. A process comprising using an azeotropic or azeotrope-like composition as dielectrics, wherein said azeotropic or azeotrope-like composition consists essentially of Z-1,1,1,4,4,4-hexafluoro-2-butene and a component selected from the group consisting of diethyl ether, 2-chloropropane, and perfluoro(2-methyl-3-pentanone).

## Patentansprüche

1. Zusammensetzung bestehend im Wesentlichen aus:
(a) Z-1,1,1,4,4,4-Hexafluor-2-buten; und
(b) einer Komponente ausgewählt aus der Gruppe bestehend aus Diethylether, 2-Chlorpropan und Perfluor(2-methyl-3-pentanon); wobei die Komponente in einer wirksamen Menge vorliegt, um eine azeotrope Kombination mit dem Z-1,1,1,4,4,4-Hexafluor-2-buten zu bilden.

2. Zusammensetzung bestehend im Wesentlichen aus:
(a) Z-1,1,1,4,4,4-Hexafluor-2-buten; und
(b) einer Komponente ausgewählt aus der Gruppe bestehend aus Diethylether, 2-Chlorpropan und Perfluor(2-methyl-3-pentanon); wobei die Komponente in einer wirksamen Menge vorliegt, um eine azeotropähnliche Kombination mit dem Z-1,1,1,4,4,4-Hexafluor-2-buten zu bilden.

3. Verfahren für die Herstellung eines Thermoplast- oder Duroplastschaumstoffs umfassend das Verwenden einer azeotropen oder azeotropähnlichen Zusammensetzung als Blähmittel, wobei die azeotrope oder azeotropähnliche Zusammensetzung im Wesentlichen aus Z-1,1,1,4,4,4-Hexafluor-2-buten und einer Komponente ausgewählt aus der Gruppe bestehend aus Diethylether, 2-Chlorpropan und Perfluor(2-methyl-3-pentanon) besteht.

4. Verfahren für die Kälteerzeugung, umfassend das Kondensieren einer azeotropen oder azeotropähnlichen Zusammensetzung und daraufhin das Verdampfen der azeotropen oder azeotropähnlichen Zusammensetzung in der Nähe des zu kühlenden Körpers, wobei die azeotrope oder azeotropähnliche Zusammensetzung im Wesentlichen aus Z-1,1,1,4,4,4-Hexafluor-2-buten und einer Komponente ausgewählt aus der Gruppe bestehend aus Diethylether, 2-Chlorpropan und Perfluor(2-methyl-3-pentanon) besteht.

5. Verfahren umfassend das Verwenden einer azeotropen oder azeotropähnlichen Zusammensetzung als Lösungsmittel, wobei die azeotrope oder azeotropähnliche Zusammensetzung im Wesentlichen aus Z-1,1,1,4,4,4-Hexafluor-2-buten und einer Komponente ausgewählt aus der Gruppe bestehend aus Diethylether, 2-Chlorpropan und Perfluor(2-methyl-3-pentanon) besteht.

6. Verfahren für die Herstellung eines Aerosolprodukts, umfassend das Verwenden einer azeotropen oder azeotropähnlichen Zusammensetzung als Treibmittel, wobei die azeotrope oder azeotropähnliche Zusammensetzung im Wesentlichen aus Z-1,1,1,4,4,4-Hexafluor-2-buten und einer Komponente ausgewählt aus der Gruppe bestehend aus Diethylether, 2-Chlorpropan und Perfluor(2-methyl-3-pentanon) besteht.

7. Verfahren umfassend das Verwenden einer azeotropen oder azeotropähnlichen Zusammensetzung als Wärmeübertragungsmedium, wobei die azeotrope oder azeotropähnliche Zusammensetzung im Wesentlichen aus Z-1,1,1,4,4,4-Hexafluor-2-buten und einer Komponente ausgewählt aus der Gruppe bestehend aus Diethylether, 2-Chlorpropan und Perfluor(2-methyl-3-pentanon) besteht.

8. Verfahren zum Löschen oder Unterdrücken eines Brands, umfassend das Verwenden einer azeotropen oder azeotropähnlichen Zusammensetzung als Brandlösch- oder -unterdrückungsmittel, wobei die azeotrope oder azeotropähnliche Zusammensetzung im Wesentlichen aus Z-1,1,1,4,4,4-Hexafluor-2-buten und einer Komponente ausgewählt aus der Gruppe bestehend aus Diethylether, 2-Chlorpropan und Perfluor(2-methyl-3-pentanon) besteht.

9. Verfahren umfassend das Verwenden einer azeotropen oder azeotropähnlichen Zusammensetzung als Dielektrikum, wobei die azeotrope oder azeotropähnliche Zusammensetzung im Wesentlichen aus Z-1,1,1,4,4,4-Hexafluor-2-buten und einer Komponente ausgewählt aus der Gruppe bestehend aus Diethylether, 2-Chlorpropan und Perfluor(2-methyl-3-pentanon) besteht.

## Revendications

1. Composition essentiellement constituée de:
(a) Z-1,1,1,4,4,4-hexafluoro-2-butène; et
(b) d'un composant sélectionné dans le groupe constitué de l'éther de diéthyle, du 2-chloropropane, et de la perfluoro(2-méthyl-3-pentanone); où ledit composant est présent en une quantité efficace pour former une combinaison azéotrope avec le Z-1,1,1,4,4,4-hexafluoro-2-butène.

2. Composition essentiellement constituée de:
(a) Z-1,1,1,4,4,4-hexafluoro-2-butène; et
(b) d'un composant sélectionné dans le groupe constitué de l'éther de diéthyle, du 2-chloropropane, et de la perfluoro(2-méthyl-3-pentanone); où ledit composant est présent en une quantité efficace pour former une combinaison de type azéotrope avec le Z-1,1,1,4,4,4-hexafluoro-2-butène.

3. Procédé de préparation d'une mousse thermoplastique ou thermodurcie comprenant l'utilisation d'une composition azéotrope ou de type azéotrope comme agent d'expansion, où ladite composition azéotrope ou de type azéotrope est essentiellement constituée de Z-1,1,1,4,4,4-hexafluoro-2-butène et d'un composant sélectionné dans le groupe constitué de l'éther de diéthyle, du 2-chloropropane, et de la perfluoro(2-méthyl-3-pentanone).

4. Procédé de production de réfrigération comprenant la condensation d'une composition azéotrope ou de type azéotrope et par la suite l'évaporation de ladite composition azéotrope ou de type azéotrope à proximité du corps à refroidir, où ladite composition azéotrope ou de type azéotrope est essentiellement constituée de Z-1,1,1,4,4,4-hexafluoro-2-butène et d'un composant sélectionné dans le groupe constitué de l'éther de diéthyle, du 2-chloropropane, et de la perfluoro(2-méthyl-3-pentanone).

5. Procédé utilisant une composition azéotrope ou de type azéotrope comme solvant, où ladite composition azéotrope ou de type azéotrope est essentiellement constituée de Z-1,1,1,4,4,4-hexafluoro-2-butène et d'un composant sélectionné dans le groupe constitué de l'éther de diéthyle, du 2-chloropropane, et de la perfluoro(2-méthyl-3-pentanone).

6. Procédé de production d'un produit aérosol comprenant l'utilisation d'une composition azéotrope ou de type azéotrope comme propulseur, où ladite composition azéotrope ou de type azéotrope est essentiellement constituée de Z-1,1,1,4,4,4-hexafluoro-2-butène et d'un composant sélectionné dans le groupe constitué de l'éther de diéthyle, du 2-chloropropane, et de la perfluoro(2-méthyl-3-pentanone).

7. Procédé comprenant l'utilisation d'une composition azéotrope ou de type azéotrope comme milieu de transfert thermique, où ladite composition azéotrope ou de type azéotrope est essentiellement constituée de Z-1,1,1,4,4,4-hexafluoro-2-butène et d'un composant sélectionné dans le groupe constitué de l'éther de diéthyle, du 2-chloropropane, et de la perfluoro(2-méthyl-3-pentanone).

8. Procédé d'extinction ou de suppression d'un feu comprenant l'utilisation d'une composition azéotrope ou de type azéotrope comme agent d'extinction ou de suppression de feu, où ladite composition azéotrope ou de type azéotrope est essentiellement constituée de Z-1,1,1,4,4,4-hexafluoro-2-butène et d'un composant sélectionné dans le groupe constitué de l'éther de diéthyle, du 2-chloropropane, et de la perfluoro(2-méthyl-3-pentanone).

9. Procédé comprenant l'utilisation d'une composition azéotrope ou de type azéotrope comme diélectrique, où ladite composition azéotrope ou de type azéotrope est essentiellement constituée de Z-1,1,1,4,4,4-hexafluoro-2-butène et d'un composant sélectionné dans le groupe constitué de l'éther de diéthyle, du 2-chloropropane, et de la perfluoro(2-méthyl-3-pentanone).
